# EUROPEAN PATENT APPLICATION

(11) **EP 1 732 341 A1**
(43) Date of publication of application: **13.12.2006**
(21) Application number: 05721250.8
(22) Date of filing: 22.03.2005
(51) Int. Cl.: H04Q 7/38, G01C 21/00, G08G 1/005, H04Q 7/34

(54) **COMMUNICATION DEVICE, GUIDE METHOD, GUIDE PROCESSING PROGRAM, AND RECORDING MEDIUM**

(30) Priority: 25.03.2004 JP 2004089333
(71) Applicant: Pioneer Design Corporation, Meguro-ku, Tokyo 153-8654 (JP)
(72) Inventor: YAMAMOTO, Kentaro, Pioneer Corporation, Kawagoe-shi, Saitama 3508555 (JP)
(74) Representative: Popp, Eugen
(86) International application number: PCT/JP2005/005150
(87) International publication number: WO 2005/094110

(57) **Abstract**

It is an object of the invention to provide an improved mobile communication device capable of showing a user or the like a place which is in a good radio wave condition and highly reliable radio wave condition information.

The communication device comprises: a communication unit 4 which performs radio communication by means of radio wave through a mobile body communication network; a field intensity measuring unit 5 which measures a field intensity of radio wave of a time when the communication unit 4 is performing a communication and outputs a field intensity data Dep; a position information detecting unit 3 which detects a position of the mobile communication device 1 and outputs a position data Dps; a storage unit 7 which stores, in accordance with the position data Dps and as a measured data Da, a field intensity data Dep measured by a field intensity measuring unit 5 at a specified measurement position, and builds a database of the measured data Da; and a guiding unit 6. Then, the guiding unit 6 prepares a field intensity distribution in accordance with the measured data Da stored in the storage unit 7, and detects a current position of the mobile communication device 1 in accordance with the position data Dps outputted from the position information detecting unit 3, and detects by virtue of the field intensity a direction which ensures a good radio wave condition for the communication unit 4 and then presents the same.

## Description

### Technical Field

The present invention relates to a communication device which performs radio communication by means of radio wave through a communication network. This invention also relates to a guiding method, a guidance processing program, and a recording medium for use in the communication device.

### Background Technique

In recent years, communication device such as mobile PC, vehicle navigator having a radio communication function, and cellular phone have become more and more popular. Further, with radio communication network becoming increasingly improved, a ubiquitous network environment has also been improved which can provide a user or the like with an improved convenience.

For example, Japanese Unexamined Patent Application Publication No. 2003-101462 has disclosed a vehicle navigation device having a radio communication function. Such a navigation device has a general navigation function so that once it receives an instruction from a user or the like for searching for an optimum route to a desired destination, the navigation device will search for the optimum route (recommended route) extending from the user's current position to the desired destination by virtue of a coming radio wave from a GPS (Global Positioning System) satellite, and indicate by means of map the optimum route on a display. Further, the navigation device has another function capable of actively using a radio communication function to talk over a telephone to receive road map information from an information distribution center or the like.

Moreover, a vehicle navigation device having a radio communication function is not limited only to talking on a telephone or receiving map information, but can also download through a radio communication network various information such as music data and picture data from a distribution site on the Internet. In this way, by presenting a user or the like with various information, it is possible to ensure an excellent convenience.

In addition, regarding a cellular phone, since a user or the like is allowed to use any desired location to make a phone call to the other party, it is possible to ensure a further improved convenience as compared with a conventional communication environment where a user or the like was unable to make a phone call if a fixed telephone was not used.

Patent Document 1: Japanese Unexamined Patent Application Publication No. 2003-101462.

### Disclosure of the Invention

### Problem(s) to be Solved by the Invention

However, regarding a communication device which performs a radio communication, since there is an inevitable problem that a communication quality is apt to be influenced by a state of a radio wave, the following problem has been occurring . Namely, withamobile communication device such as a navigation device and a cellular phone having a radio communication function, if a user or the like has moved to a location a radio wave can not reach or if a radio wave is not in a good condition, it will be impossible to ensure as acceptable radio communication as it was originally expected.

Then, if a communication has suddenly stopped, a user or the like usually does not know a place which is in a good radio wave condition. As a result, the user or the like has to move here and there in order to find a place which is in a good radio wave condition, thus causing a considerable inconvenience.

On the other hand, if an accident or an emergency has occurred, a user or the like can quickly and correctly report the accident or emergency to a third party such as a public organization only using a mobile communication device such as a navigation device and a cellular phone, an importance of a mobile communication device such as a navigation device and a cellular phone as communication means for use at an emergency has been fully understood.

However, as discussed above, when a user or the like has moved to a place which is not in a good radio wave condition or a radio wave can not reach, a user or the like has to move here and there in order to find a place which is in a good radio wave condition, thus making it difficult to perform a quick and exact report. Because of this, it has long been desired to develop a mobile communication device which can improve such a situation.

As one solution to solve the afore-mentioned problem, the navigation device discussed in the above-mentioned patent document tries to in advance store, together with road map information, another information indicating a field intensity distribution of a communication radio wave which is distributed by a recording medium such as CD-ROM, so as to perform a comparison among a current position of a user or the like in traveling, road map information, and field intensity distribution information, thus judging whether a user or the like is moving through a place which is in a bad radio wave condition (out of an area which allows a telephone communication). Then, once it is judged that a user or the like is moving through a place which is in a bad radio wave condition, the navigation device will search for a place which is in a good radio wave condition (within an area which allows a telephone communication) by virtue of the above-mentioned road map information and field intensity distribution information, and indicate by means of map on its display a route which directs a user or the like from a non-telephone communication area to a telephone communication area.

However, regarding the above-discussed conventional navigation device, since a user or the like is guided to a place which is in a good radio wave condition, and since the above-mentioned field intensity distribution information of a communication radio wave is distributed by a recording medium such as CD-ROM, the field intensity distribution information itself will become out of date, resulting in a problem that when a user or the like is guided from a non-telephone communication area to a telephone communication area, it will become impossible to perform a highly reliable guidance which satisfies a current position of a user or the like.

The present invention has been accomplished in view of the above-discussed problem and it is an object of the invention to provide an improved mobile communication device capable of showing a user or the like a place which is in a good radio wave condition and highly reliable radio wave condition information.

### Means for Solving the Problem

An invention recited in claim 1 is a communication device which performs radio communication by means of radio wave through a communication network, said device comprising: position information detectingmeans for detecting a position of said communication device and outputting position information; field intensity measuring means for measuring a field intensity of said radio wave and outputting field intensity information; storing means for correlating said position information with said field intensity information and storing these information as measured information; and guiding means for preparing a field intensity distribution in accordance with said measured information stored in the storing means, and presenting a direction ensuring a good radio wave condition with respect to a current position of said communication device, in accordance with the prepared field intensity distribution and the position information.

An invention recited in claim 7 is a guiding method for use with a communication device which performs radio communication by means of radio wave through a communication network, said method comprising: a position information outputting step for detecting a position of said communication device and outputting position information; a field intensity outputting step for measuring a field intensity of said radio wave and outputting field intensity information; a storing step for correlating said position information outputted by the position information outputting step with said field intensity information outputted by the field intensity outputting step, and storing these information as measured information; a field intensity distribution preparing step for preparing a field intensity distribution in accordance with said measured information stored in the storing step; and a presenting step for presenting a direction ensuring a good radio wave condition with respect to a radio wave condition at a current position of said communication device, in accordance with the field intensity distribution prepared by the field intensity distribution preparing step and the position information outputted by the position information outputting step.

An invention recited in claim 8 is a guidance processing program which allows a computer to perform a guidance processing, said computer being provided in a communication device which performs radio communication by means of radio wave through a communication network, said program comprising: a position information outputting step for detecting a position of said communication device and outputting position information; a field intensity outputting step for measuring a field intensity of said radio wave and outputting field intensity information; a storing step for correlating said position information with said field intensity information and storing these information as measured information; a field intensity distribution preparing step for preparing a field intensity distribution in accordance with said measured information stored in the storing step; and a presenting step for presenting a direction ensuring a good radio wave condition with respect to a radio wave condition at a current position of said communication device, in accordance with the field intensity distribution and the position information.

An invention recited in claim 9 is a recording medium characterized by having recorded therein a guidance processing program recited in claim 8.

### Brief Description of the Drawings

Fig. 1 is a block diagram showing a structure of a mobile communication device formed according to an embodiment of the present invention.
Fig. 2 is a block diagram showing a structure of a mobile communication device formed according to a more detailed embodiment of the present invention.
Fig. 3 provides views illustrating the functions of the mobile communication device shown in Fig. 2.
Fig. 4 provides views illustrating picture marks displayed on the display unit of the mobile communication device shown in Fig. 2.
Fig. 5 is a flow chart showing an example of an operation performed by the mobile communication device shown in Fig. 2.
Fig. 6 is a flow chart showing another example of an operation performed by the mobile communication device shown in Fig. 2.
Fig. 7 is a flow chart showing a further example of an operation performed by the mobile communication device shown in Fig. 2.

### Best Mode of Carrying Out the Invention

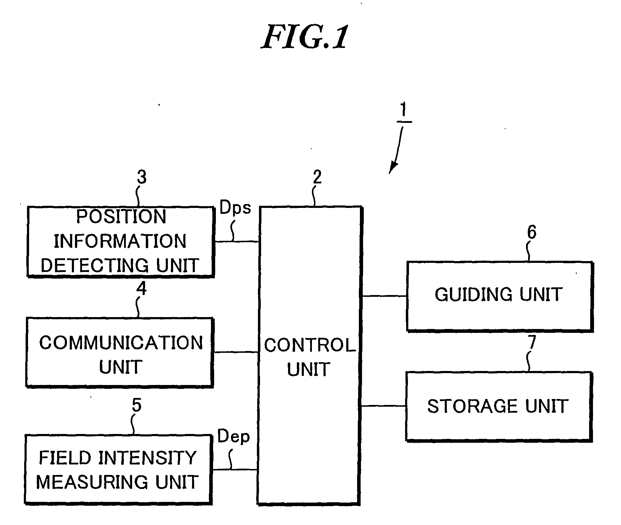

Next, description will be given to explain the mobile communication device of the present invention with reference to Fig.1. Fig. 1 is a block diagram showing several major portions of the mobile communication device.

As shown in Fig. 1, the mobile communication device 1 comprises a control unit 2, a position information detecting unit 3, a communication unit 4, a field intensity measuring unit 5, a guiding unit 6, and a storage unit 7.

The position information detecting unit 3 contains a GPS receiver or the like to utilize a coming radio wave from a GPS satellite, so as to detect a position of the mobile communication device 1 and prepare a position data Dps indicating a detection result.

The communication unit 4 is provided such that once a user or the like makes a phone call or performs an e-mail or Internet communication or the like, the unit can perform a radio communication by means of a radio wave through a mobile body communication network.

The field intensity measuring unit 5 measures a field intensity of a radio wave in accordance with a reception signal received by the communication unit 4 during a communication, and prepares a field intensity data Dep indicating a measurement result.

The storage unit 7 stores, as measured data Da, a field intensity data Dep outputted from the field intensity measuring unit 5. Namely, the field intensity data Dep and the position data Dps are correlated so as to store, as measured data Da, the field intensity data Dep which specifies a measuring position. Then, by storing the field intensity data Dep being constantly outputted as measured data Da, it is possible to establish a database storing a great number of measured data Da.

The guiding unit 6 operates in accordance with the position data Dps outputted from the position information detecting unit 3, to detect a current position of the mobile communication device 1 which has moved (i.e., a current position of a user or the like), and prepares a field intensity distribution in accordance with the measured data Da stored in the storage unit 7. Then, with respect to the detected current position, the communication unit 4 detects, from the field intensity distribution, a direction which ensures a good radio wave condition and presents the detected direction on a display.

The control unit 2 not only controls an entire operation of the mobile communication device 1, but also has the following function. Namely, when the measured data Da which has already been stored in the storage unit 7 and is older than a predetermined time is to be erased by being replaced with new measured data Da, the control unit 2 will accumulate the latest measured data Da by sequentially erasing old measured data Da already stored in the storage unit 7.

With regard to the mobile communication device of the present embodiment having the above-described structure, once a user or the like carries the mobile communication device 1 and moves, the field intensity measuring unit 5 will operate to actually measure a field intensity of a radio wave when the communication unit 4 performs a communication during the movement, while the storage unit 7 stores measured data Da in which the field intensity data Dep outputted from the field intensity measuring unit 5 has been made corresponding to the position data Dps outputted from the position information detecting unit 3, thereby establishing a database. Then, when the guiding unit 6 shows a place possible for the communication unit 4 to perform a communication under a good radio wave condition, a field intensity distribution will be prepared in accordance with the measured data Da, so as to detect a direction capable of ensuring a good radio wave condition in accordance with such a field intensity distribution.

In this way, using the mobile communication device of the present embodiment, it is possible to store, as measured data corresponding to position information, field intensity information of a radio wave measured in a place to which a user or the like has actually moved. Then, it is possible to utilize the stored measured data Da to detect a direction (place) capable of ensuring a good radio wave condition for the communication unit 4, thereby rendering it possible to show a user or the like an extremely highly reliable guidance information.

### Example

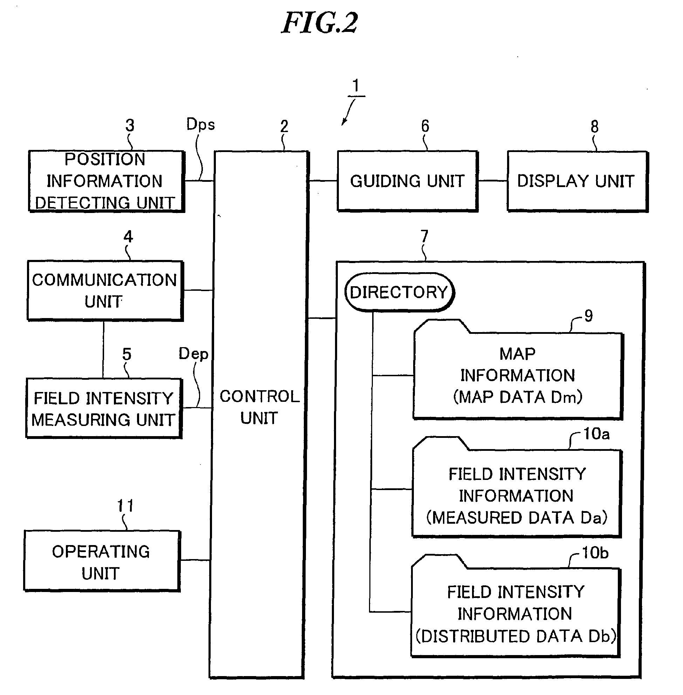

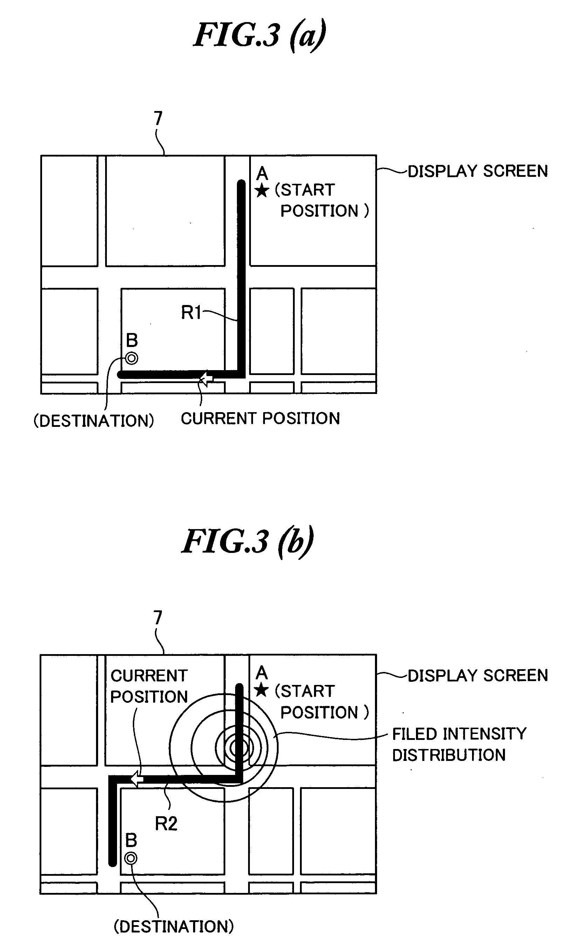

Next, description will be given to explain in more detail an embodiment of the mobile communication device with reference to Figs. 2 to 7. Fig. 2 is a block diagram showing a structure of a cellular phone of the present embodiment having navigation function, Fig. 3 is an explanatory view showing the function of the cellular phone.

As shown in Fig. 2, the cellular phone (hereinafter, referred to as "mobile communication device") 1 comprises a control unit 2, a position information detecting unit 3, a communication unit 4, a field intensity measuring unit 5, a guiding unit 6, a storage unit 7, a display 8, and an operating unit 11.

The control unit 2 is formed of a circuit having a microprocessor (MPU) or the like. The microprocessor carries out a system program stored in advance in a ROM or the like so as to control an entire operation of the mobile communication device 1.

The control unit 2 is connected with the operating unit 11 having various operating buttons (not shown) which can be operated by a user or the like, thereby rendering it possible to issue various desired instructions to the control unit 2.

Moreover, the control unit 2 is connected with the position information detecting unit 3, the communication unit 4, the field intensity measuring unit 5, the guiding unit 6, the storage unit 7, and the operating unit 11 through so-called data bus, address bus, and control bus.

The position information detecting unit 3 has a GPS receiver which receives a coming radio wave from a GPS satellite, measures a current position (latitude and longitude) of the mobile communication device 1 in accordance with a reception signal received by the GPS receiver, and supplies a position data Dps indicating the measurement result to the control unit 2.

Here, as will be described in detail later, once there is an instruction "navigation start" issued by a user or the like through the operating unit 11, the mobile communication device 1 will start its navigation operation under control of the control unit 2. Meanwhile, the position information detecting unit 3 starts its position measurement to detect a current position (latitude and longitude) every moment, and supplies each position data Dps to the control unit 2.

Further, the control unit 2 supplies the position data Dps one by one to the guiding unit 6, to perform the so-called navigation to display by means of map on the display 8 an optimum route to a destination desired by a user or the like, in accordance with each position data Dps.

Moreover, in accordance with each respective position data Dps outputted from the position information detecting unit 3, the control unit 2 prepares a measured data Da which will be discussed later, and stores the same in a first field intensity information file 10a provided in the storage unit 7.

The communication unit 4 has communication means for performing a radio communication through a mobile body communication network, so that once a user or the like operates at the operating unit 11, makes a phone call, or performs an e-mail or Internet communication or the like, the communication unit 4 will start a communication under control of the control unit 2.

When the communication unit 4 is performing a communication with a base station or a relay station, the field intensity measuring unit 5 will constantly measure a reception sensitivity (in other words, a field intensity of a coming radio wave) of a coming radio wave, and supply the field intensity data Dep indicating the measurement result to the control unit 2. That is, a frequency conversion circuit which receives a coming radio wave and generates an intermediate frequency signal is provided in the communication means contained in the communication unit 4, while the field intensity measuring unit 5 measures an effective value or the like of this intermediate frequency signal so as to measure a field intensity of the coming radio wave. On the other hand, although the field intensity measuring unit 5 of the present embodiment measures an effective value of an intermediate frequency signal in order to measure the field intensity of a coming radio wave, it is also possible to use other technique to measure a field intensity of a coming radio wave.

Furthermore, once the field intensity measuring unit 5 outputs the field intensity data Dep, the control unit 2 will generate a measured data Da formed by combining three sorts of data including the field intensity data Dep, the above-mentioned position data Dps outputted from the position information detecting unit 3, and the time data Dtm outputted from the clock circuit (not shown) provided in the control unit 2. Such a measured data Da is then stored in the first field intensity information file 10a provided in the storage unit 7.

Namely, the control unit 2, by correlating the field intensity data Dep, the position data Dps and the time data Dtm, generates a measured data Da indicating a field intensity of a coming radio wave (arriving at a place a user or the like actually exists) and a measurement time. The measured data Da is then stored in the first field intensity information file 10a.

Then, for example, once a user or the like carries the mobile communication device 1 and moves while at the same time making a phone call, performing an e-mail communication, Internet communication or the like, the control unit 2 will successively generate the measured data Da and store the same in the storage unit 7, thereby establishing a database containing field intensity distribution information.

Even in a case where a user or the like does not make a phone call, perform an e-mail communication or Internet communication or the like, the field intensity measuring unit 5 will measure a radio wave condition between itself and a base station or a mobile station to output field intensity data Dep, while control unit 2 generates one after another measured data Da having a correlation among field intensity data Dep, position data Dps and time data Dtm, and stores the same in the storage unit 7, thereby establishing a database containing field intensity distribution information.

The storage unit 7 is comprised of a nonvolatile semiconductor memory which allows re-writing. In accordance with a file system having a predetermined directory structure, the storage unit 7 can manage various sorts of data and has not only the above-mentioned first field intensity information file 10a, but also a map information file 9 which stores map data Dm, as well as a second field intensity information file 10b which stores distributed data Db.

Here, the map information file 9 serves as so-called database for map information which stores the latest map data Dm transmitted from a distribution site on the Internet or the like.

The first field intensity information file 10a is a database which, by storing the above-mentioned measured data Da, establishes the information showing a field intensity of a coming radio wave in a place where a user or the like exists.

The second field intensity information file 10b is a so-called field intensity information database which stores the distributed data Db indicating the field intensity of a radio wave in each location, and transmitted along with map data Dm from a distribution site on the Internet or the like.

The guiding unit 6 is formed of a digital signal processor (DSP) or the like, while the display 8 formed of a liquid crystal display or the like has various kinds of functions which will be described later, thereby making it possible to display information useful to a user or the like.

### <Usual guiding function>

The guiding unit 6 has <usual guiding function> as its first function.
Once a user or the like operates at the operating unit 11 to input an instruction called "navigation start" by specifying a desired destination, the guiding unit 6 will start a navigation processing. At this time, if a user or the like does not make a phone call, perform an e-mail communication or the Internet communication, i.e., if the communication unit 4 is not performing any communication, <usual guiding function> will operate to have an operation mode which is "usual guidance".

At the time of an operation mode which is "usual guidance", the guiding unit 6 detects a position (start position) of a user or the like of a time when the navigation start was specified, in accordance with the position data Dps fed from the position information detecting unit 3, and finds an optimum route from the start position to the destination which satisfies the user's predetermined requirements (for example, a shortest distance and a shortest time) which the user or the like has set through the operating unit 11. Further, the guiding unit 6 reads the map data Dm (indicating an area near the start position) from the map information file 9 of the storage unit 7, and indicates by means of map the map data together with the above-mentioned optimum route on the display unit 8. Namely, as shown in Fig. 3(a), the display unit 8 shows the optimum route R1 from a start position A to a destination B, as well as the map data.

Furthermore, if a user or the like moves from the start position A, the guiding unit 6 will detect a new position (current position) of the user or the like, in accordance with the position data Dps supplied constantly from the position information detecting unit 3. Then, by virtue of a cursor such as an arrow indicating an advancing direction, the guiding unit 6 will operate to display the current position of the user or the like in a real time. Therefore, as shown in Fig. 3(a), if a user or the like moves from the start position A to the destination B along the optimum route R1, the cursor will move along the optimum route R1, so as to inform the user or the like of the current position.

Moreover, in a case where a distance from the start position A to the destination B is a long distance, the guiding unit 6 will read from the map information file 9 the map data Dm showing an area near the current position, provide the user or the like with an easily legible display by displaying a map, an optimal route R1 and a cursor until a user or the like arrives at the destination B.

Furthermore, when a user or the like has moved without following the optimal route R1 which was initially displayed, the guiding unit 6 will search for a new optimum route to the destination B using the current position as a new start position, and read from the map information file 9 the map data Dm showing an area near the new start position, indicate by means of map the map data together with the new optimum route on the display unit 8. Subsequently, the same processing is repeated by continuously displaying the current position of the user or the like using the cursor until arriving at the destination B, thereby carrying out a navigation processing in accordance with the latest movement of the user or the like.

### <Communication guiding function>

The guiding unit 6 has <communication guiding function> as its second function.
Once a user or the like operates at the operating unit 11 to input an instruction called "navigation start" by specifying a desired destination, the guiding unit 6 will start a navigation processing. At this time, if a user or the like makes a phone call, performs an e-mail communication or the Internet communication, i.e., if the communication unit 4 is performing a communication, <communication guiding function> will operate to have an operation mode which is "communication guidance".

At the time of an operation mode which is "communication guidance", the guiding unit 6 detects a position (start position) of a user or the like of a time when the navigation start was specified, in accordance with the position data Dps fed from the position information detecting unit 3, and finds an optimum route from the start position to the destination which satisfies the user's predetermined requirements (for example, a shortest distance and a shortest time). Further, the guiding unit 6 reads map data Dm (indicating an area near the start position) from the map information file 9, displays by means of map the map data together with the above optimum route on the display unit 8, and shows by means of cursor a current position of the user or the like.

Therefore, at the time of an operation mode which is "communication guidance", the guiding unit 6 performs substantially the same navigation processing as the above-mentioned operation mode which is "usual guidance". However, at the time of an operation mode which is "communication guidance", the operation mode will be different from an operationmode which is "usual guidance", thereby searching for an optimum route which can ensure a good radio wave condition for the communication unit 4, and can satisfy the afore-mentioned requirements set by the user or the like.

For example, during an operation mode which is "usual guidance", even if the route R1 from the start position to the destination B will be considered an optimal route, another requirement will be added to search for an optimum route capable of ensuring a good radio wave condition for the communication unit 4, thereby searching for an optimum route from the start position A to the destination B. In this way, if other route has become an optimum route, such an other route R2, which gives preference to radio wave condition, will be displayed as an optimum route on the display 8 in a manner shown in Fig. 3(b), thereby indicating by means of cursor a current position of a user or the like.

Here, the guiding unit 6 will operate in accordance with a searching condition in which a requirement set by a user or the like has been made less severe, to decide an area extending from the start position A to the destination B (i.e., an area which is not limited to road) to be a searching area, thereby reading out the measured data Da and the distribution data Db corresponding to the searching area from the first and second field intensity information files 10a and 10b. Then, the guiding unit 6 prepares a field intensity distribution of the searching area, in accordance with the measured data Da and the distribution data Db which have been read out, searches for a route extending from the start position A to the destination B which ensures a good radio wave condition, in accordance with the above field intensity distribution, and displays an optimum route R2 which gives preference to radio wave condition on the display 8. Further, the guiding unit 6 will show a user or the like a place which is in a good radio wave condition, by displaying the prepared field intensity distribution in the form of contour line, as shown in Fig. 3(b).

Furthermore, regarding the distribution data Db stored in the second field intensity file 10b, the guiding unit 6 will prepare a field intensity distribution by giving preference to the measured data Da stored in the first field intensity file 10a, and also prepare, in accordance with the distribution data Db, a field intensity distribution of a place in which the measured data Da has not been stored. Then, searching for an optimal route is carried out in accordance with a field intensity distribution prepared from the measured data Da, while the field intensity distribution of a place in which the measured data Da has not been stored is complemented by the field intensity distribution prepared from the distribution data Db, thereby searching for an optimum route not containing any interruption from a start position to a destination. Moreover, the field intensity distribution prepared from the measured data Da and the field intensity distribution prepared from the distribution data Db are displayed as contour line in the display unit 8, so as to show a user or the like a place which is in a good radio wave condition.

By virtue of the above functions, the guiding unit 6 will utilize the measured data Da stored in the first field intensity information file 10a to search for an optimum route and indicate, as field intensity distribution, a place which is in a good radio wave condition. Therefore, it is possible to provide navigation information in accordance with an extremely highly reliable measured data Da measured when a user or the like actually moved.

As described above, the present embodiment utilizes the measured data Da and the distribution data Db to search for an optimum route and display field intensity distribution. However, it is also possible to utilize only the measured data Da to search for an optimum route and display field intensity distribution. In such a case, it is possible to search for an optimum route of a place in which the measured data Da has been stored, in accordance with the field intensity distribution prepared from the measured data Da, and to connect the obtained optimum route along a road on a map, thereby approximately searching for an optimum route of a place in which the measured data Da has not been stored.

### <Map non-display function>

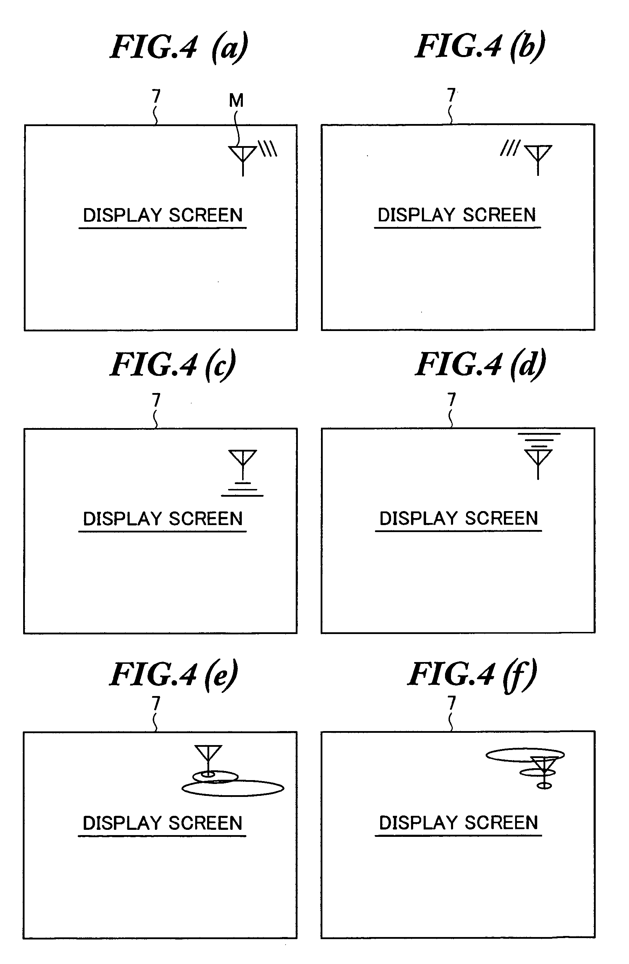

The guiding unit 6 has <map non-display function> as its third function.
When the guiding unit 6 performs a navigation processing through an operation mode which is the above-mentioned "usual guidance" or "communication guidance" and displays by means of map a route to the destination on the display unit 8, once a user issues an instruction not to perform a displaying by means of map, the guiding unit 6 will be in an operation mode which is "map non-displaying". At this time, as shown in Fig. 4(a), there is no map being displayed on the display unit 8, but only a picture mark M is displayed on one corner of the display, indicating a direction for a user or the like to move from the current position along a route to a destination.

Namely, during an operation mode which is "map non-display", the guiding unit 6 will not operate to have a map displayed on the displayunit 8, but will operate to continue the navigationprocessing, prepare a field intensity distribution, search for an optimal route, detect a current position of a user or the like in traveling, and detect a direction for a user or the like to move from the current position along the optimal route. Then, instead of performing a displaying by means of map, a direction for a user or the like to move from the current position is displayed by virtue of a picture mark M on part of the display screen of the display unit 8.

Namely, as shown in Fig. 4(a), when a direction for a user or the like to move from a current position is on the right side, the guiding unit 6 will cause part of the screen to display a picture pattern M in which a plurality of lines are added to the right side of an antenna mark. On the other hand, as shown in Fig. 4(b), when a direction for a user or the like to move from a current position is on the left side, the guiding unit 6 will cause part of the screen to display a picture pattern M in which a plurality of lines are added to the left side of an antenna mark. Besides, as shown in Fig. 4(c), when a direction for a user or the like to move from a current position is on the rear side, the guiding unit 6 will cause part of the screen to display a picture pattern M in which a plurality of lines are added to the lower side of an antenna mark. In addition, as shown in Fig. 4(d), when a direction for a user or the like to move from a current position is on the front side, the guiding unit 6 will cause part of the screen to display a picture pattern M in which a plurality of lines are added to the upper side of an antenna mark.

According to <map non-display function>, when a navigation processing based on an operation mode of "usual guidance" is continued, if a user or the like moves in a direction shown by a picture mark M, it is possible for the user or the like to reach the destination while at the same time keeping displaying all the information on almost the entire screen of the display unit 8 except e-mail wording and map downloaded through the Internet.

Moreover, when a navigation processing based on an operation mode of "communication guidance" is continued, if a user or the like moves in a direction shown by a picture mark M, it is possible for the user or the like to reach the destination while at the same time keeping displaying various kinds of information and performing communication under a good radio wave condition.

In this way, since it is possible to provide a user or the like with navigation information and at the same time display other information on the display unit 8, it is possible for the user or the like to improve a navigation operability

Moreover, since the guiding unit 6 uses a picture pattern M to display a direction which ensures a good radio wave condition on the screen of the display unit 8, it is possible to perform a guidance displaying easily understandable for a user or the like.

### <Automatic changeover function giving preference to movement>

The guiding unit 6 has <automatic changeover function giving preference to movement> as its fourth function.
Once the guiding unit 6 performs a navigation processing based on the above-mentioned <communication guiding function> in accordance with an instruction issued by a user or the like, <automatic changeover function giving preference to movement> will start its operation so that the two functions will proceed in parallel with each other.

Then, the guiding unit 6 operates in accordance with the position data Dps outputted from the position information detecting unit 3, to calculate a distance L a user or the like has moved within a predetermined time τ (for example, 5 minutes), thereby calculating a moving speed S from a ratio of a moved distance L to a passed time τ. In practice, such a moving speed S is calculated every time τ. If a calculated moving speed S is smaller than a threshold Th (for example, 4km/h), it will be judged that the user or the like is moving on foot.

Furthermore, when the guiding unit 6 continues the navigation processing based on the above-mentioned <communication guiding function> and indicates by means of map an optimal route ensuring a good radio wave condition on the display 8, if the user or the like moves along the optimal route, the guiding unit 6 will judge that the user or the like is just in its movement while at the same time paying attention to good radio wave condition, thereby continuing the navigation based on <communication guiding function> mentioned above. In other words, even if the guiding unit 6 has judged that the user or the like is moving on foot, so long as the user or the like moves along an optimal route, it will judge that the user or the like is moving while at the same time paying attention to good radio wave condition, thereby continuing the navigation based on <communication guiding function> mentioned above.

On the other hand, when the guiding unit 6 continues the navigation processing based on the above-mentioned <communication guiding function> and indicates by means of map an optimal route ensuring a good radio wave condition on the display 8, if it is judged that the user or the like is moving on foot but not along the optimal route, it will be judged that the user or the like is paying attention to a movement in a desired direction, instead of paying attention to good radio wave condition, thus starting a navigation processing based on the <usual guiding function> discussed above.

In other words, during a navigation processing based on <usual guiding function>, when a user or the like is moving on foot in other direction without following a communication guidance, the guiding unit 6 will automatically detect a moving state of the user or the like, and performs a changeover from <communication guiding function> showing an optimal route providing a good radio wave condition to a navigation processing based on <usual guiding function>.

However, it is also possible for the guiding unit 6 not to be changed over to a navigation processing based on <usual guiding function>, but to detect a current position of a user or the like moving at every moment, in accordance with the position data Dps. Then, the measured data Da and the distribution data Db corresponding to the surrounding area of the current position are read out from the first and second field intensity information files 10a and 10b. Afterwards, the measured data Da and the distribution data Db are used to prepare a field intensity distribution in the above-mentioned surrounding area. The field intensity distribution is then displayed in the form of contour line, thereby showing a user or the like a place which is in a good radio wave condition.

Moreover, it is possible for the guiding unit 6 to continue a navigation processing based on an operation mode which is "communication guidance" by virtue of the above-mentioned <map non-display function>, and to display a direction for a user or the like to move from its current position on only part of a display screen using a picture mark shown in Fig. 4(a). In such a case, if a user or the like is moving in a direction following the picture mark M, it is possible to continue a navigation processing based on an operation mode which is "communication guidance", by virtue of <map non-display function>. In other words, even when the guiding unit 6 has judged that a user or the like is moving on foot, if the user or the like is moving in a direction following the picture mark M, it will be judged that the user or the like is moving towards the destination while at the same time paying attention to good radio wave condition, thereby making it possible to continue a navigation processing based on an operation mode which is "communication guidance", by virtue of <map non-display function>.

On the other hand, in a case where the guiding unit 6 continues a navigation processing based on an operation mode which is "communication guidance" by virtue of the above-mentioned <map non-display function> and displays a direction for a user or the like to move from its current position on only part of a display screen using a picture mark shown in Fig. 4(a), if it is judged that a user or the like is moving on foot but not in a direction following the picture mark M, it will be judged that the user or the like is paying attention to a movement in a desired direction, instead of paying attention to good radio wave condition, thus changing a current navigation over to a navigation processing based on the <usual guiding function> discussed above.

According to <automatic changeover function giving preference to movement> described above, after a user or the like has specified a navigation based on <communication guiding function> or <map non-display function>, if a user or the like changes its moving direction while working on foot, the guiding unit 6 will automatically detect a moving state of the user or the like, and change a current navigation to a navigation based on <usual guiding function>, thereby performing a guidance according to an actual moving state of a user or the like.

Furthermore, even when a current navigation is changed over to a navigation based on <usual guiding function>, if a direction ensuring a good radio wave condition is continued to be displayed by virtue of a field intensity distribution, it is still possible to provide an excellent convenience even if a user or the like tries to make a phone call, perform an e-mail communication or an Internet communication.

### <Field intensity automatic displaying function>

The guiding unit 6 has <field intensity displaying function> as its fifth function.
When a user or the like makes a phone call, performs an e-mail communication or an Internet communication without specifying a navigation based on <communication guiding function>, the guiding unit 6 will change to an operation mode which is <field intensity automatic displaying>, and can use a picture mark M to display a direction ensuring a good radio wave condition on part of the screen of the display unit 8 in the same manner as shown in Fig. 4(a), without performing a navigation processing.

Namely, in an operation mode which is <field intensity automatic displaying>, the guiding unit 6 will not perform a navigation processing, but will detect a current position of a user or the like in accordance with the position data Dps outputted every moment from the position information detecting unit 3 after the communication unit 4 has started a communication. Then, the measured data Da and the distribution data Db corresponding to the surrounding area of the current position are read out from the first and second field intensity information files 10a and 10b. Subsequently, the measured data Da and the distribution data Db are used to prepare a field intensity distribution in the above-mentioned surrounding area. Further, based on such a field intensity distribution, it is possible to use a picture mark M to display on only part of a display screen a direction which is close to the current position and can provide the best radio wave condition.

Furthermore, even in an operation mode which is "field intensity automatic displaying", the guiding unit 6 can utilize one of various picture marks shown in Figs. 4 (a) - 4 (d) to display a direction ensuring a good radio wave condition on only part of the screen of the display unit 8, in the same manner as in <map non-display function>.

Thus, according to <field intensity automatic displaying function>, what a user or the like has to do is only to make a phone call, perform an e-mail or Internet communication, so as to automatically present a direction which ensures a good radio wave condition, as well as to show a direction ensuring a good radio wave condition in response to a new position to which a user or the like has moved. In this way, it is possible to perform a communication under a good communication condition so as to guide a user or the like in acceptable manner.

Furthermore, even in a case of <field intensity automatic displaying function>, the guiding unit 6 can operate to display a direction which ensures a good radio wave direction, in accordance with the measured data Da measured when a user or the like actually moved, so that it is possible to provide an extremely highly reliable navigation information.

### <Field intensity manual displaying function>

The guiding unit 6 has <field intensity manual displaying function> as its sixth function.
Once a user or the like operates at the operating unit 11 to issue an instruction for detecting a place which is in a good radio wave condition, without specifying a navigation based on <communication guiding function> and without making a phone call, performing an e-mail or Internet communication, the guiding unit 6 will change to an operation mode which is <field intensity manual displaying>, thereby using a picture mark M to indicate a direction ensuring a good radio wave condition on part of the display screen of the display unit 8, as shown in Fig. 4(a).

In other words, once the guiding unit 6 changes to an operation mode which is "field intensity manual displaying", the position information detecting unit 3 will be actuated to start inputting position data Dps. Then, based on the position data Dps being supplied hereto at every moment, a current position of a user or the like is detected. Subsequently, the measured data Da and the distribution data Db corresponding to the surrounding area of the current position are read out from the first and second field intensity information files 10a and 10b. Subsequently, the measured data Da and the distribution data Db are used to prepare a field intensity distribution in the above-mentioned surrounding area. Further, based on such a field intensity distribution, it is possible to use a picture mark M to display on only part of a display screen a direction which is close to the current position and can provide the best radio wave condition.

In this way, according to <field intensity manual displaying function>, even when a communication is not being performed, a user or the like can still know a direction which ensures a good radio wave condition. Thus, it is possible to confirm a radio wave state prior to a communication and start the communication when the radio wave is in a good condition.

Namely, even if a user or the like does not make a phone call or perform an e-mail or Internet communication, it is still possible to present a direction ensuring a good radio wave condition in response to a current position to which a user or the like has moved. As a result, before a user or the like makes a phone call or performs an e-mail or Internet communication to instruct a navigation based on the above-mentioned <communication guiding function>, it is possible to quickly and exactly know in advance a location which ensures a good communication condition, thereby providing an excellent convenience.

### <Three-dimensional guiding function>

The mobile communication device 1 is provided with a function capable of performing a communication with a short-distance communication system installed in a building. For example, a communication device fabricated in accordance with the so-called Blue Tooth Standard is installed on each floor of the building. When the communication unit 4 performs a communication with the communication device on each floor, the field intensity measuring unit 5 will detect the field intensity of a coming radio wave from the communication device on each floor, and supply the field intensity data Dep to the control unit 2. Then, the control unit 2 prepares a measured data Da in accordance with the field intensity data Dep, and stores the same in the first field intensity information file 10a.

Then, once a user or the like makes a phone call or issues an instruction for the afore-mentioned "field intensity manual displaying", the guiding unit 6 will operate in accordance with the measured data Da stored in the first field intensity information file 10a, so as to prepare a field intensity distribution of a coming radio wave from a communication device installed in the above-mentionedbuilding, i.e., to prepare a three-dimensional field intensity distribution, thereby detecting by virtue of the field intensity distribution a direction which is close to the current position of a user or the like and can ensure a good radio wave condition, and displaying the same on the display unit 8 by virtue of a picture mark M.

Further, in a case where a place ensuring a good radio wave condition is located on the upper side within the building, the guiding unit 6 will operate to display on part of the display screen a picture pattern M having a plurality of ellipse groups on the upper side of an antenna mark, as shown in Fig. 4(f). On the other hand, in a case where a place ensuring a good radio wave condition is located on the lower side within the building, the guiding unit 6 will operate to display on part of the display screen a picture pattern M having a plurality of ellipse groups on the lower side of an antenna mark, as shown in Fig. 4(e).

In this way, according to <three-dimensional guiding function>, if a user or the like wishes to make a phone call in a place which can ensure a good radio wave condition within the building, it is possible to know which floor of the building can ensure a good radio wave condition, only by observing a picture mark M displayed on the display unit 8. Therefore, it is possible to provide an improved convenience to a user or the like.

Moreover, since the guiding unit 6 operates to use one of various picture patterns M to display a direction ensuring a good radio wave condition on the display unit 8, it is possible to present a guidance display easily understandable to a user or the like.

### <Common data utilizing function>

The mobile communication device 1 has a function of transmitting, from the communication unit 4 to a base station, a field intensity data Dps of a current position measured by the field intensity measuring unit 5, as well as another function of downloading from the base station the field intensity data of various places, using the control unit 2 to prepare the measured data Da from the field intensity data, and to store the same in the first field intensity information file 10a.

Namely, the mobile communication device 1 has such a function that once a plurality of owners transmit field intensity data Dps of their current positions from the communication unit 4 to the base station, these field intensity data Dps will be accumulated to form a common database on the base station side. Then, the common field intensity data are transmitted to mobile communication devices 1 of respective owners.

In this way, once a user or the like makes a phone call or performs an e-mail or Internet communication, the guiding unit 6 will prepare a field intensity distribution in accordance with the common measured data Da stored in the first field intensity information file 10a, and display a direction ensuring a good radio wave condition on the display unit 8.

Therefore, according to <common data utilizing function>, it is possible to operate in accordance with the latest field intensity data collected from a plurality of users and satisfying an actual situation, so as to show a user or the like a direction ensuring a good radio wave condition, thereby providing an extremely highly reliable information.

### <Measured data time-out function>

The control unit 2 is provided with <measured data time-out function> which is prepared in accordance with the field intensity data Dep outputted from the field intensity measuring unit 5, while older data among the measured data Da stored in the first field intensity information file 10a will be erased at an earlier time.

Namely, when the control unit 2 prepares the measured data Da in accordance with the field intensity data Dep outputted from the field intensity measuring unit 5, it will produce a measured data Da formed by combining three sorts of data including a field intensity data Dep, position data Dps outputted from the position information detecting unit 3, and the time data Dtm outputted from the clock circuit provided in the control unit 2, and store the same in the first field intensity information file 10a.

Then, the control unit 2 investigates the time data Dtm of each measured data Da stored in the first field intensity information file 10a and erases older measured data Da at an earlier time, so as to ensure the new measured data Da in the first field intensity information file 10a within the storage capacity of the storage unit 7.

According to the above-described functions, since it is possible to make effective use of the storage unit 7 having only a limited storage capacity and since it is possible to store the latest measured data Da, it is possible for the guiding unit 6 to prepare a high reliable field intensity distribution so as to provide a user or the like with highly reliable guidance information.

Furthermore, according to <measured data time-out function>, during an operation based on <automatic changeover function giving preference to movement>, <field intensity automatic displaying function>, and <field intensity manual displaying function> or the like, once the guiding unit 6 prepares a field intensity in accordance with the measured data Da stored in the first field intensity information file 10a, it is possible to provide a guidance information having an extremely high reliability and an improved convenience.

Namely, in a case where a user or the like is moving for shopping while at the same time making a phone call, performing e-mail or Internet communication within a relatively narrow area such as a city area containing many randomly arranged buildings, the latest measured data Da indicting a field intensity of the relatively narrow area will be stored in the first field intensity information file 10a, while the control unit 2 will erase old measured data Da, thereby storing many latest measured data Da indicating the filed intensity of the relatively narrow area in the first field intensity information file 10a. As a result, once the guiding unit 6 prepares a field intensity distribution, it is possible to prepare a field intensity distribution having a high density, thereby making it possible to use a picture mark M to show a direction providing a good radio wave condition every time a user or the like has moved even a short distance.

Here, in an area such as a city area containing many randomly arranged buildings, since a radio wave condition will be changed by even a small change of location, it will be difficult for a user or the like to find a location providing a good radio wave condition even if such a location is extremely close to the current position of the user.

However, as described above, once the guiding unit 6 prepares a field intensity distribution, it is possible to prepare a field intensity distribution having a high density, thereby making it possible to use a picture mark M to show a direction ensuring a good radio wave condition every time a user or the like has moved even a short distance. As a result, it is possible for a user or the like to quickly find a location which ensures a good radio wave condition by looking at a picture mark M. In this way, according to <measured data time-out function>, especially when a user or the like moves within a relatively narrow area, it is possible to provide a guidance information having an extremely high reliability and an improved convenience.

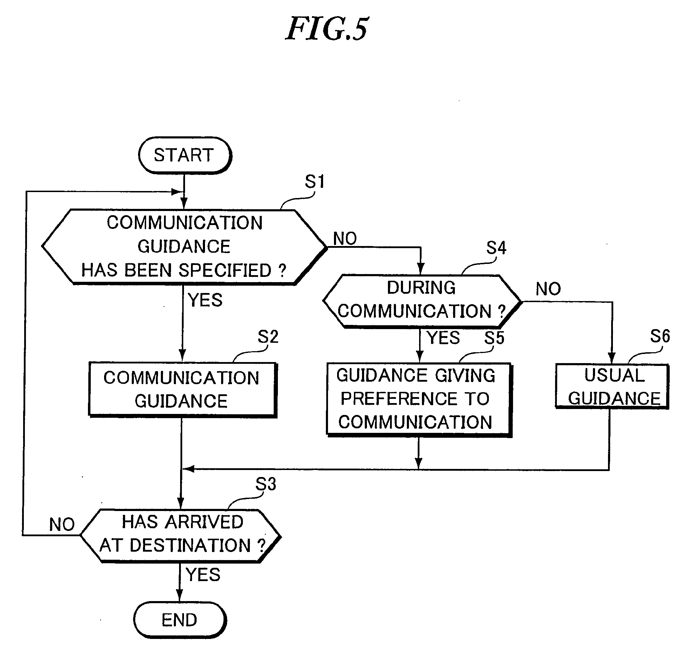

Next, description will be given to explain an example of an operation of the mobile communication device 1 having the above-described structure, with reference to flow charts shown in Figs. 5 to 7.

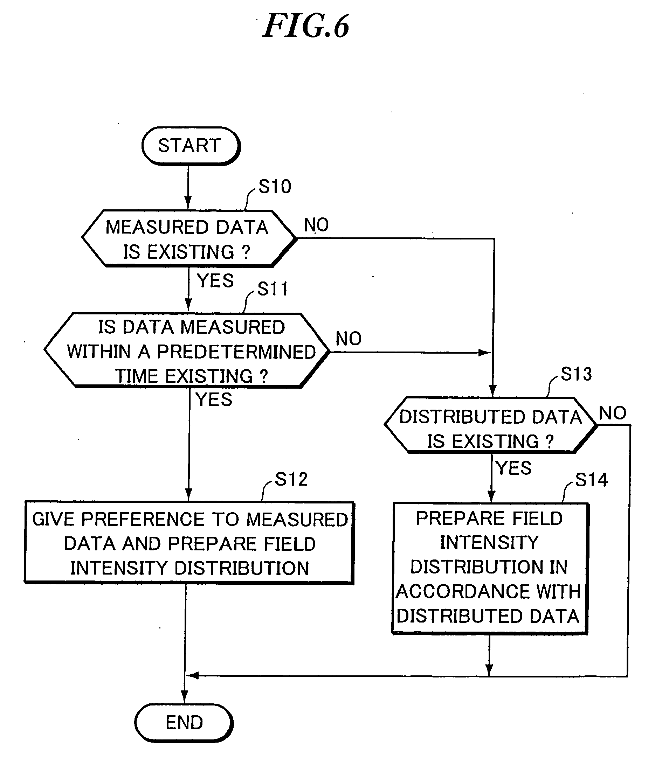

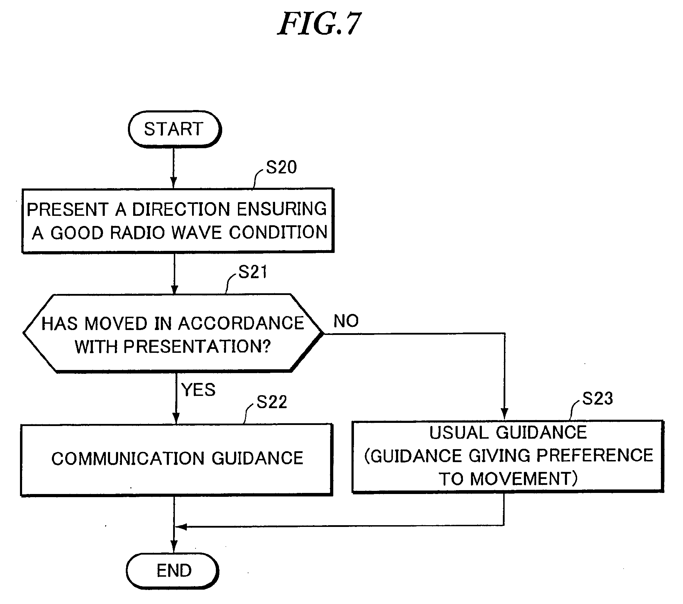

Fig. 5 is a flow chart showing a navigation operation based on <communication guiding function> and <usual guiding function>, Fig. 6 is another flow chart showing an operation when the guiding unit 6 prepares a field intensity distribution, and Fig. 7 is a further flow chart showing an operation of the guiding unit 6 based on <automatic changeover function giving preference to movement>.

As shown in Fig. 5, when a user or the like operates at the operating unit 1 to specify some conditions (such as a shortest distance and a shortest time) and to instruct a start of a navigation, the guiding unit 6 will start a navigation processing under control of the control unit 2. Then, at step S1 the guiding unit 6 will judge whether a user or the like has specified a navigation based on <communication guiding function>. If yes, the process will proceed to Step S2 to start a navigation processing based on <communication guiding function>. Then, at step S3, it is judged whether a user or the like has arrived at a destination, and the steps S1-S3 are repeated until the user or the like has reached the destination. Subsequently, at step S3, once it is judged that a use or the like has reached a destination, a navigation processing based on <communication guiding function> will be terminated.

Therefore, when a user or the like has specified a navigation based on <communication guiding function> through so-called manual operation, the guiding unit 6 will perform a navigation processing based on <communication guiding function> in accordance with the user's instruction.

Next, in the above-mentioned step S1, if the guiding unit 6 has judged that a navigation based on <communication guiding function> has not been specified, the process will proceed to step S4 and it is judged whether the communication unit 4 is performing a communication. If an answer is yes, the process will proceed to step S5 and the guiding unit 6 will automatically start a navigation processing based on the <communication guiding function>. If, it is judged in step S3 that a user or the like has arrived at a destination, the guiding unit 6 will terminate the navigation processing based on <communication guiding function>.

Moreover, if at step S4 the guiding unit 6 judges that the communication unit 4 is not performing a communication, the process will proceed to step S6 to automatically start a navigation processing based on <usual guiding function>. Then, at step S3, once it is judged that a user or the like has arrived at a destination, the guiding unit 6 will terminate the navigation processing based on <usual guiding function>.

Thus, when a user or the like has specified a start of a navigation and then made a phone call or performed an e-mail or Internet communication or the like, it is possible to automatically perform a navigation processing based on <communication guiding function>. On the other hand, when a user or the like has specified a start of a navigation but has not made a phone call or performed an e-mail or Internet communication or the like, it is possible to automatically perform a navigation processing based on <usual guiding function>. In this way, it is possible to provide a user or the like with an improved convenience.

Next, as shown in Fig. 6, when the guiding unit 6 prepares a field intensity distribution, step S10 is carried out to investigate whether a measured data is existing in the first field intensity information file 10a. If an answer is yes, the process proceeds to step S11 to further investigate whether an actually measured data is existing within a predetermined time period. Namely, when a field intensity distribution is prepared in accordance with old measured data, such a field intensity distribution has a low reliability, step S11 will be carried out to further investigate whether an actually measured data is existing within a predetermined time period.

When an actually measured data is existing within a predetermined time period, the process will proceed to step S12 which will at first make use of an actually measured data within a predetermined time period, utilize the distribution data Dm stored in the second field intensity information file 10b as a complement, and prepare a field intensity distribution in accordance with these measured data Da and distribution data Dm, followed by terminating the preparation of the field intensity distribution.

In the above-mentioned step S10 or S11, when the guiding unit 6 judges that a measured data is not existing or an actually measured data is not existing within a predetermined time, the process will proceed to step S13 to investigate whether the distribution data Db is existing in the second field intensity information file 10b. If the distribution data Db is existing, the process will proceed to step 14 at which the guiding unit 6 will prepare a field intensity distribution in accordance with the distribution data Db. Then, the preparation processing is terminated.

In this way, the guiding unit 6, by preparing a field intensity distribution using the latest measured data Da as a first preference and the distribution data Db as a complement, can present a highly reliable guidance information when showing a user or the like a direction which ensures a good radio wave condition.

Next, as shown in Fig. 7, the guiding unit 6 performs a navigation processing based on <communication guiding function> according to an instruction of a user or the like. Then, at step S20, upon showing a user or the like an optimum route or presenting a direction which ensures a good radio wave condition, the process will proceed to step S21 to investigate whether a user or the like has moved in accordance with these information. If a user or the like has moved in accordance with these information, the guiding unit 6 will continue the navigation processing based on the <communication guiding function>. Then, once the user or the like has arrived at a destination, the navigation processing will be terminated.

On the other hand, if at step S21 a user or the like has not moved in accordance with the above information, the process will proceed to step S23 at which the guiding unit 6 will automatically change over to a navigation processing based on <usual guiding function>. Then, once the user or the like has arrived at a destination, the navigation processing will be terminated.

In this way, the guiding unit 6, by performing a navigation processing satisfying an actual movement of a user or the like, can provide the user or the like with an improved convenience.

As described above, using the mobile communication device 1 of the present embodiment can guide a user or the like by virtue of various functions, thereby making it possible to provide a user or the like with an improved convenience.

Especially, it is possible to store the measured data Da in the first field intensity information file 10a, prepare a field intensity distribution in accordance with the measured data Da, search for an optimum route to the destination in accordance with the prepared field intensity distribution, show a user or the like a direction which ensures a good radio wave condition. Therefore, it is possible to present a user or the like with a highly reliable guidance information based on the latest information.

In addition, although in the present embodiment a direction ensuring a good radio wave condition is presented using a picture mark M as shown in Figs. 4 (a) - (f), it is also possible to utilize other methods to present such a direction. For example, it is possible to provide an oscillating element in the frame of the mobile communication device 1 and change an oscillating form of the oscillating element, thereby showing by an oscillation a direction which ensures a good radio wave condition. Moreover, it is also possible to provide, at one end of the frame of the mobile communication device 1, one or more color light-emitting elements which change to different colors, and change the luminescent colors of these light emitting elements, thereby presenting a direction which ensures a good radio wave condition.

Moreover, although the above description has been given to explain a mobile communication device 1 which is a cellular phone, the mobile communication device 1 of the present embodiment is also suitable for use as a vehicle navigation device having a radio communication function.

Moreover, it is also possible to use a microprocessor (MPU) which executes a computer program, to carry out the functions of the control unit 2, the position information detecting unit 3, the communication unit 4, the field intensity measuring unit 5, the guiding unit 6, and the storage unit 7 which together form the mobile communication device 1. Namely, the microprocessor (MPU) is caused to execute the computer program to carry out the functions of the control unit 2, the position information detecting unit 3, the communication unit 4, the field intensity measuring unit 5, the guiding unit 6, and the storage unit 7, thereby performing, by means of the microprocessor (MPU), a navigation based on various functions such as the above-described <communication guiding function> and <field intensity automatic displaying function> or the like.

Besides, it is also possible to store in a recording medium such as CD or DVD a computer program for carrying out the functions of the control unit 2, the position information detecting unit 3, the communication unit 4, the field intensity measuring unit 5, the guiding unit 6, and the storage unit 7, cause the microprocessor (MPU) to execute the computer program stored in the recording medium, thereby performing a navigation based on various functions such as the above-described <communication guiding function> and <field intensity automatic displaying function> or the like.

## Claims

1. A communication device which performs radio communication by means of radio wave through a communication network, said device comprising:
position information detecting means for detecting a position of said communication device and outputting position information;
field intensity measuring means for measuring a field intensity of said radio wave and outputting field intensity information;
storing means for correlating said position information with said field intensity information and storing these information as measured information;
guiding means for preparing a field intensity distribution in accordance with said measured information stored in the storing means, and presenting a direction ensuring a good radio wave condition with respect to a current position of said communication device, in accordance with the prepared field intensity distribution and the position information.

2. The communication device according to claim 1, further comprising control means for erasing a measured information older than a predetermined time, from the measured information stored in the storing means.

3. The communication device according to claim 1 or 2,
wherein the storing means further stores map information,
wherein once the guiding means receives a request from a user or the like for performing a navigation to a desired destination and when the communication means is in operation, the guiding means prepares a field intensity distribution in accordance with the measured information stored in the storing means, searches for and presents a route to the desired destination which ensures a good radio wave condition, in accordance with the prepared field intensity distribution and the map information.

4. The communication device according to claim 3, wherein after judging that a user is not moving along the route to the destination which ensures a good radio wave condition, the guiding means searches for and presents a route to the destination without using the field intensity distribution.

5. The communication device according to any one of claims 1, 2 and 4,
wherein the storing means further stores a field intensity information distributed through the communication network,
wherein the guiding means prepares the field intensity distribution in accordance with the measured information and the distributed field intensity information.

6. The communication device according to claim 5, wherein the guiding means gives preference to the measured information, uses the distributed field intensity information as a complement, and prepares the field intensity distribution.

7. A guiding method for use with a communication device which performs radio communication by means of radio wave through a communication network, said method comprising:
a position information outputting step for detecting a position of said communication device and outputting position information;
a field intensity outputting step for measuring a field intensity of said radio wave and outputting field intensity information;
a storing step for correlating said position information outputted by the position information outputting step with said field intensity information outputted by the field intensity outputting step, and storing these information as measured information;
a field intensity distribution preparing step for preparing a field intensity distribution in accordance with said measured information stored in the storing step; and
a presenting step for presenting a direction ensuring a good radio wave condition with respect to a radio wave condition at a current position of said communication device, in accordance with the field intensity distribution prepared by the field intensity distribution preparing step and the position information outputted by the position information outputting step.

8. A guidance processing program which allows a computer to perform a guidance processing, said computer being provided in a communication device which performs radio communication by means of radio wave through a communication network, said program comprising:
a position information outputting step for detecting a position of said communication device and outputting position information;
a field intensity outputting step for measuring a field intensity of said radio wave and outputting field intensity information;
a storing step for correlating said position information with said field intensity information and storing these information as measured information;
a field intensity distribution preparing step for preparing a field intensity distribution in accordance with said measured information stored in the storing step; and
a presenting step for presenting a direction ensuring a good radio wave condition with respect to a radio wave condition at a current position of said communication device, in accordance with the field intensity distribution and the position information.

9. A recording medium **characterized by** having recorded therein a guidance processing program recited in claim 8.
